# EUROPÄISCHE PATENTSCHRIFT

(11) **EP 1 262 050 B1**
(45) Veröffentlichungstag und Bekanntmachung des Hinweises auf die Patenterteilung: **20.04.2005**
(21) Anmeldenummer: 00935158.6
(22) Anmeldetag: 31.05.2000
(51) Int. Cl.: H04L 29/06, H04L 1/18

(54) **SENDEREINRICHTUNG EINES PROTOKOLL-SYSTEMS ZUR ÜBERTRAGUNG VON NACHRICHTEN**
TRANSMITTER IN A PROTOCOL SYSTEM FOR TRANSMITTING MESSAGES
DISPOSITIF EMETTEUR D'UN SYSTEME DE PROTOCOLE POUR LE TRANSFERT DE MESSAGES

(30) Priorität: 03.09.1999 DE 19942160
(43) Veröffentlichungstag der Anmeldung: 04.12.2002
(73) Patentinhaber: SIEMENS AKTIENGESELLSCHAFT, 80333 München (DE)
(72) Erfinder: GRADISCHNIG, Klaus, David, Reston, VA 20194-1977 (US); TÜXEN, Michael, D-81479 München (DE)
(86) Internationale Anmeldenummer: PCT/EP2000/005001
(87) Internationale Veröffentlichungsnummer: WO 2001/019051

(56) Entgegenhaltungen:
- US-A- 5 754 754
- U.BLACK: "ATM VOLUME II: SIGNALING IN BROADBAND NETWORKS, CHAPTER 6: SAAL, SSCOP, AND SSCF." 1998 , PRENTICE-HALL. , US. XP002158091 Seite 79 -Seite 89
- "ITU-T RECOMMENDATION Q.2110, B-ISDN ATM ADAPTATION LAYER - SERVICE SPECIFIC CONNECTION ORIENTED PROTOCOL (SSCOP)" 1994 , INTERNATIONAL TELECOMMUNICATION UNION , GENEVA, CH. XP002158092 das ganze Dokument

## Beschreibung

1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel[e] der Erfindung.

### Zu 1. :

Moderne Protokolle zur Datenübertragung auf Übertragungsstrecken, speziell solche, die ein sog. "Multiple Selective Reject" (MSR) Verfahren anwenden, verwenden oft zwei unterschiedliche Kontrollnachrichten, um das erneute Senden verlorengegangener Datennachrichten anzufordern (Einschub: Im Gegensatz zum sog. "Go-Back-N Verfahren", bei dem bei Auftreten eines Fehlers/Verlustes alle Datenpakete ab diesem Fehler/Verlust neu übertragen werden, auch wenn nachfolgende Datenpakete bereits fehlerfrei gesendet worden sind, werden bei Selective Reject Verfahren nur die tatsächlich fehlerhaften/verlorenen Datenpakte neu übertragen. Multiple Selective Reject Verfahren erlauben das Bestehen mehrerer Lücken im Datenstrom und können mit einer einzigen Anforderung die Wiederholung mehrerer oder aller fehlenden Daten veranlassen).

Eine der Kontrollnachrichten, die im folgenden Text abgekürzt als "U" bezeichnet wird (in den Figuren und in Q.2110 wird diese Kontrollnachricht mit "USTAT" abgekürzt), wird dazu verwendet, um eine neu entdeckte Lücke im Nachrichtenstrom dem Ursprung (Sender) der Nachrichten mitzuteilen. Die andere Kontrollnachricht, die im folgenden Text abgekürzt als "C" bezeichnet wird (in den Figuren und in Q.2110 wird diese Kontrollnachricht mit "STAT" abgekürzt), wird hingegen dazu verwendet, den Ursprung über alle zur Zeit bestehenden Lücken zu informieren. Während der Ursprung beim Erhalt von U sofort alle darin angeforderten Nachrichten wiederholt, da sicher ist, daß diese Nachrichten noch nicht wieder angefordert worden sind, ist dies bei den Kontrollnachrichten des Typs C nicht notwendigerweise der Fall.

Falls es das Protokoll bzw. die darunterliegende Transportschicht erfordern, daß Nachrichten nicht oder nur in sehr begrenztem Maße unnötig wiederholt werden dürfen, muß über einen Timer sichergestellt werden, daß sich keine der wieder angeforderten Nachrichten bereits wieder im Transit befindet bzw. nach Aussenden von C beim Empfänger eingetroffen sein könnte, oder es muß über ein aufwendiges Verfahren mit Austausch von Sequenznummern sichergestellt werden, daß der Ursprung erkennen kann, ob wieder angeforderte Nachrichten eventuell gar nicht gesendet werden müssen. Ein Protokoll, welches letztere Methode verwendet, ist das gemäß Q.2110. Das Protokoll gemäß Q.2110 geht davon aus, daß die darunterliegende Transportschicht die Nachrichten ohne Vertauschung oder Vervielfachung überträgt.

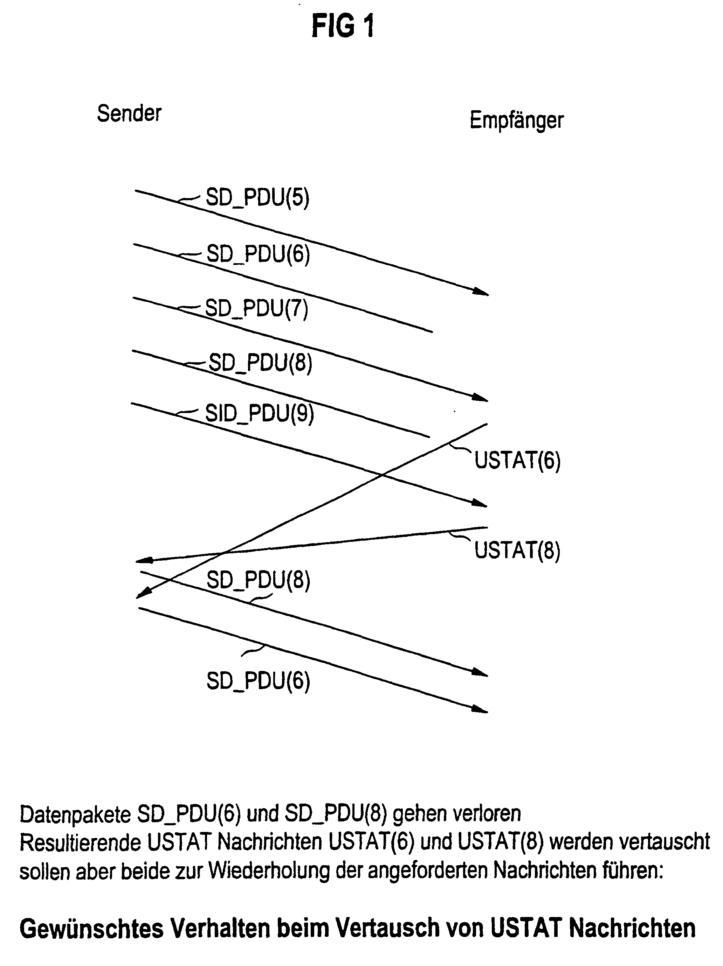

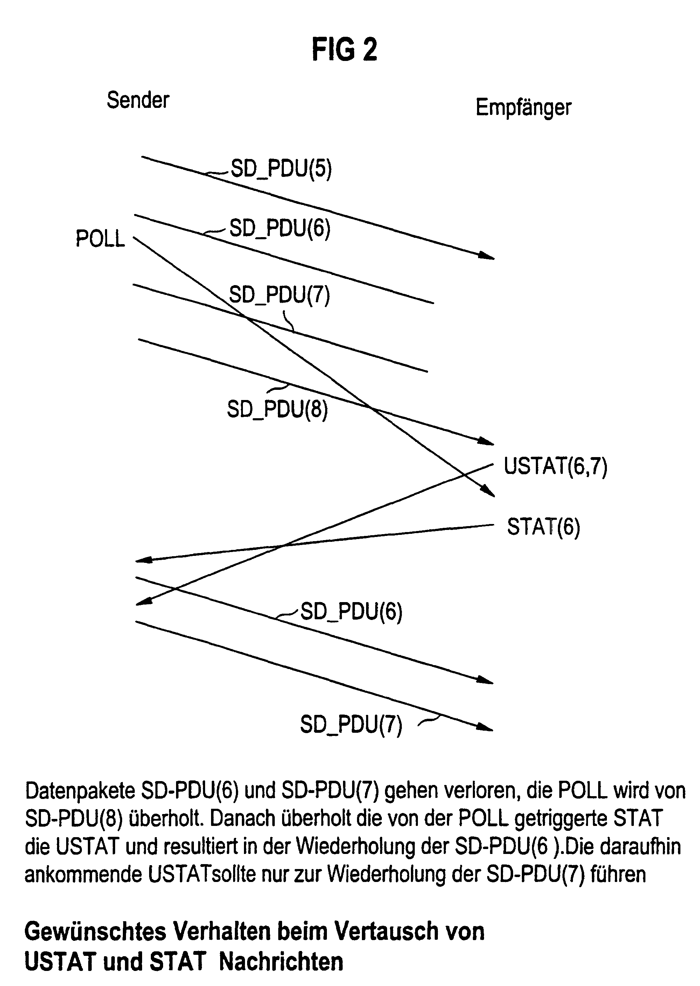

Wenn nicht sichergestellt ist, daß die unter dem Protokoll liegende Transportschicht die Nachrichtenreihenfolge nicht vertauscht bzw. nicht verdoppelt, müssen zusätzliche Maßnahmen getroffen werden, um die gewünschte Minimierung der Nachrichtenwiederholungen sicherzustellen, ohne dabei jedoch gewünschte Wiederholungen zu unterlassen. Insbesondere ist dabei zu beachten, daß, wenn eine Nachricht U(1) eine Nachricht U(2) überholt (siehe Figur 1), beide Nachrichten zu den gewünschten Wiederholungen führen sollen, wenn hingegen eine Nachricht C eine Nachricht U überholt, dann sollten die in U geforderten Wiederholungen nicht durchgeführt werden (siehe Figur 2), falls diese bereits von C veranlaßt wurden.

Überholungen von C Nachrichten untereinander, führen aufgrund des bereits vorhandenen Mechanismus zum Austausch von Sequenznummern hingegen normalerweise nicht zu unnötigen Nachrichtenwiederholungen.

### Zu 2. :

In dem einzigen bisher bekannten Protokoll, dem Protokoll gemäß Draft ITU Empfehlung Q.2111 (vom 19.07.1999), welches Nachrichten des Typs U und C über einer die korrekte Nachrichtenreihenfolge nicht garantierender Transportschicht (z.B. einem Internet Protokoll Netz) benutzt und versucht, die Nachrichtenwiederholung trotzdem zu minimieren, wurde dieses Problem nur unzureichend gelöst. Es wurde ein Mechanismus zum Erkennen der richtigen Reihenfolge der C Nachrichten, welche zur richtigen Behandlung der auch in diesen Nachrichten enthaltenen Kreditinformationen ("alte" Kreditinformation muß ignoriert werden) wichtig ist, eingeführt. Dieser Mechanismus (der Parameter N(SS) in den STAT-PDU, welche in Q.2111 die C-Nachrichten darstellen) ist jedoch nicht zur Lösung des Problems im Stande, da er U Nachrichten nicht berücksichtigt. Ein weiterer Mechanismus (auf der Variablen VT(H) basierend, siehe Q.2111), welcher eingeführt wurde, um zu erkennen, ob eine U eine C Nachricht überholte oder eine C eine U oder eine U eine U, wird beim Stand der Technik nur zur richtigen Behandlung der Kreditinformation benutzt. Da der Mechanismus beim Stand der Technik nicht unterscheidet, ob eine U Nachricht von einer U oder einer C Nachricht überholt wurde - im ersten Fall wird die Kreditinformation nicht bearbeitet, wohingegen die Wiederholungsanforderung aber schon bearbeitet werden sollten - ist er zumindest ohne Änderung nicht zur Lösung des Problems verwendbar.

### Zu 3. :

Erfindungsgemäß kann dieses Problem nun auf zwei Arten gelöst werden, wobei die erste Art eine Erweiterung des oben beschriebenen, in der Draft Q.2111 (19.07.1999) enthaltenen Mechanismus darstellt. Diese löst das Problem jedoch nicht in jedem Fall, kann aber geringeren Ansprüchen gerecht werden. Die zweite Methode löst das Problem dann vollständig.

### 3.1 :

Die in Q.2111 eingeführte Variable VT(H) merkt sich die höchste, in einem Parameter einer C-Nachricht (in Q.2111 das letzte bzw. größte (im Sinne der Moduloarithmetik) Listelement oder, wenn keine Listelemente enthalten sind, der Parameter N(R) der STAT-PDU) oder U-Nachricht (in Q.2111 das zweite bzw. größte (im Sinne der Moduloarithmetik) der USTAT-PDU) durch den Empfänger an den Sender gemeldete Sequenznummer einer SD-PDU (siehe Q.2111). Wie aus Q.2111 leicht zu sehen ist, kann eine U Nachricht nur neu sein, wenn die im zweiten Listelement enthaltene Sequenznummer größer als VT(H) ist, wohingegen eine C Nachricht neuer ist als eine etwaige zuvor empfangene U Nachricht, wenn die in C enthaltene höchste Sequenznummer größer gleich VT(H) ist. Wie oben erwähnt, ist aber für die Bearbeitung der Wiederholanforderungen in einer U Nachricht nur von Interesse, ob sie von einer C Nachricht überholt worden ist, oder nicht. Wenn man also zusätzlich zu VT(H) zumindest eine Variable VT(CH) einführt, welche die größte (im Sinne der Moduloarithmetik)einer C Nachricht enthaltene Sequenznummer speichert, dann sind Wiederholanforderungen in einer U Nachricht nur von Interesse, wenn die in ihr enthaltene größte (im Sinne der Moduloarithmetik)Sequenznummer größer als VT(CH) ist. Von den in der U Nachricht enthaltenen Wiederholungsanforderungen führen außerdem nur solche zu einer tatsächlichen Wiederholung, für die die Sequenznummer der betroffenen Nachricht größer als VT(CH) ist.

### 3.2 :

Es ist jedoch schwierig bis ausgeschlossen, alle möglichen Szenarien der Nachrichtenüberholungen und -vervielfachungen zu betrachten und die zufriedenstellende Funktionsweise der Lösung 3.1 oder einer von ihr abgeleiteten Lösung zu beurteilen.

Wie unter 2. ausgeführt und aus der Spezifikation des Drafts der Q.2111 (vom 19.07.1999) ersichtlich ist, gibt es in diesem Draft bereits Mechanismen, die sicherstellen, daß C Nachrichten (d.h. STAT Nachrichten) auch bei Vertauschung ihrer Reihenfolge durch die benutzte Übertragungsschicht keine unnötigen Wiederholungen auslösen. Also muß das Problem nur mehr für die U (USTAT) Nachrichten gelöst werden. Dazu ruft man sich in Erinnerung, daß die Erzeugung der U Nachrichten höchstens beim erstmaligen Erkennen einer Lücke im empfangenen Nachrichtenstrom erfolgt und daher beim Erhalt der U (USTAT) Nachricht noch keine Wiederholung der durch die U (USTAT) Nachricht als verlustig gemeldeten Nachrichten erfolgt sein kann, wenn durch die benutzte Übertragungsschicht keine Reihenfolgevertauschungen auftreten. Man muß also sicherstellen, daß in U (USTAT) Nachrichten als verlustig gemeldeten Nachrichten nur dann als Reaktion auf die entsprechenden U (USTAT) Nachrichten wieder gesendet werden, wenn sie bis zu diesem Zeitpunkt erst genau einmal ausgesendet worden waren.

Erfindungsgemäß kann dieses Problem nun in leicht überschaubarer Weise auch dadurch gelöst werden, daß man im Übertragungsbuffer (transmisssion buffer), in dem die Nachrichten warten bis ihr Empfang bestätigt wurde, einen Zustand mitführt, welcher angibt, ob (bzw. wie oft) eine Nachricht bereits wiederholt wurde. Wurde eine Nachricht bereits mindestens einmal wiederholt, so wird eine sie betreffende, in einer U Nachricht enthaltene Wiederholungsanforderung ignoriert, andernfalls nicht.

Es soll bemerkt werden, daß die erwähnten Vergleiche natürlich in bekannter und z.B. in Q.2111 beschriebener Weise mit passenden Moduloarithmetik durchgeführt werden.

Weiters sei zu bemerken, daß ein Protokoll über einer Transportschicht mit den beschriebenen Eigenschaften, generell mit unnötig wiederholten Nachrichten fertig werden muß.

### Zu 4. :

Im folgenden werden Ausführungsbeispiele für beide Mechanismen auf der Basis von Draft Q.2111 (19.07.1999) beschrieben.

In einem Ausführungsbeispiel der Lösung nach 3.1 wird zusätzlich eine Variable VT(CH) eingeführt, welche wie VT(H) gesetzt wird, dies jedoch nur bei der Behandlung einer STAT Nachricht.

In einem Ausführungsbeispiel der Lösung nach 3.2 wird im Transmissionsbuffer VT(TB) jeder Platz um eine Komponente RxCnt erweitert, welcher beim ersten Aussenden einer Nachricht auf 0 gesetzt und bei jeder Wiederholung um 1 erhöht wird. Werden Nachrichten in einer USTAT wieder angefordert, werden diese jeweils nur dann wiederholt, wenn der entsprechende RxCnt auf 0 steht.

## Patentansprüche

1. Sendereinrichtung eines Protokoll-Systems zur Übertragung von Nachrichten, die
- einen Übertragungsbuffer umfaßt, in dem die Nachrichten warten bis ihr Empfang von einer Empfängereinrichtung des Protokoll-Systems bestätigt wurde,
- Kontroll-Nachrichten von der Empfängereinrichtung empfängt, die Wiederholungsanforderungen bezüglich mindestens einer gesendeten Nachricht enthalten können, wobei es Kontrollnachrichten einer ersten Art gibt, bei denen sichergestellt ist, daß sie bei Verdopplung bzw. Vertauschung ihrer Reihenfolge durch die benutzte Transportschicht keine unnötigen Wiederholungen auslösen, und wobei es Kontrollnachrichten einer zweiten Art gibt, bei denen nicht sichergestellt ist, daß sie bei Verdopplung bzw. Vertauschung ihrer Reihenfolge durch die benutzte Transportschicht unnötige Wiederholungen auslösen,
**dadurch gekennzeichnet, daß**
- der Übertragungsbuffer einen Zustand mitführt, welcher angibt, ob eine Nachricht bereits mindestens ein Mal wiederholt gesendet wurde,
- die Sendereinrichtung eine Wiederholungsanforderung, die in einer Kontroll-Nachricht der genannten zweiten Art enthalten ist, ignoriert, wenn der Zustand in dem Übertragungsbuffer angibt, daß die Nachricht bereits mindestens einmal wiederholt gesendet wurde.

2. Sendereinrichtung nach Anspruch 1
**dadurch gekennzeichnet, daß**
bei Kontrollnachrichten der genannten ersten Art durch einen Timer sichergestellt ist, daß sie bei Verdopplung bzw. Vertauschung ihrer Reihenfolge durch die benutzte Transportschicht keine unnötigen Wiederholungen auslösen.

3. Sendereinrichtung nach Anspruch 1
**dadurch gekennzeichnet, daß**
bei Kontrollnachrichten der genannten ersten Art durch einen Austausch von Sequenznummern sichergestellt ist, daß sie bei Verdopplung bzw. Vertauschung ihrer Reihenfolge durch die benutzte Transportschicht keine unnötigen Wiederholungen auslösen.

4. Sendereinrichtung nach einem der Ansprüche 1 bis 3,
**dadurch gekennzeichnet, daß**
die Sendereinrichtung zu dem Protokollsystem Q.2111 gemäß aktuellem Stand gehört.

## Claims

1. Transmitter of a protocol system for transmitting messages, which
- comprises a transmission buffer in which the messages wait until their reception has been confirmed by a receiver device of the protocol system,
- receives control messages from the receiver device which can contain repetition requests with respect to at least one transmitted message, there being control messages of a first type in which it is ensured that they do not trigger any unnecessary repetitions when their order is duplicated or swapped by the transport layer used,
and there being control messages of a second type in which it is not ensured that they trigger unnecessary repetitions when their order is duplicated or swapped by the transport layer used,
**characterized in that**
- the transmission buffer also carries a state which specifies whether a message has already been retransmitted at least once,
- the transmitter ignores a repetition request contained in a control message of said second type if the state in the transmission buffer specifies that the message has already been retransmitted at least once.

2. Transmitter according to Claim 1, **characterized in that**, in the case of control messages of said first type, it is ensured by a timer that they do not trigger any unnecessary repetitions when their order is duplicated or swapped by the transport layer used.

3. Transmitter according to Claim 1, **characterized in that**, in the case of control messages of said first type, an exchange of sequence numbers ensures that they do not trigger any unnecessary repetitions when their order is duplicated or swapped by the transport layer used.

4. Transmitter according to one of Claims 1 to 3, **characterized in that** the transmitter belongs to the protocol system Q.2111 according to its current version.

## Revendications

1. Dispositif émetteur d'un système de protocole pour le transfert de messages, qui
- comprend un tampon de transmission, dans lequel les messages attendent jusqu'à ce que leur réception soit confirmée par un dispositif récepteur du système de protocole,
- reçoit des messages de contrôle du dispositif récepteur, ceux-ci pouvant contenir des demandes de répétition en ce qui concerne au moins un message émis,
sachant qu'il y a des messages de contrôle d'un premier type, dans lesquels il est assuré qu'en cas de doublage resp. de permutation de leur ordre par la couche de transport utilisée, ils ne déclenchent pas de répétitions inutiles,
et sachant qu'il y a des messages de contrôle d'un deuxième type, dans lesquels il n'est pas assuré qu'en cas de doublage resp. de permutation de leur ordre par la couche de transport utilisée, ils ne déclenchent pas de répétitions inutiles,
**caractérisé en ce que**
- le tampon de transmission conduit un état, lequel indique si un message a déjà été émis au moins une fois de manière répétée,
- le dispositif émetteur ignore une demande de répétition qui est comprise dans un message de contrôle du deuxième type mentionné, lorsque l'état dans le tampon de transmission indique que le message a déjà été émis au moins une fois de manière répétée.

2. Dispositif émetteur selon la revendication 1,
**caractérisé en ce que**
dans les messages de contrôle du premier type mentionné, il est assuré au moyen d'une horloge qu'en cas de doublage resp. de permutation de leur ordre par la couche de transport utilisée, ils ne déclenchent pas de répétitions inutiles.

3. Dispositif émetteur selon la revendication 1
**caractérisé en ce que**
dans les messages de contrôle du premier type mentionné, il est assuré par un échange de numéros de séquence qu'en cas de doublage resp. de permutation de leur ordre par la couche de transport utilisée, ils ne déclenchent pas de répétitions inutiles.

4. Dispositif émetteur selon l'une quelconque des revendications 1 à 3,
**caractérisé en ce que**
le dispositif émetteur fait partie du système de protocole Q.2111 selon l'état actuel.
